(19) **Europäisches Patentamt / European Patent Office / Office européen des brevets**

(11) **EP 2 494 337 B1**

(12) **EUROPEAN PATENT SPECIFICATION**

(45) Date of publication and mention
of the grant of the patent:
**08.01.2014 Bulletin 2014/02**

(21) Application number: **10778931.5**

(22) Date of filing: **01.11.2010**

(51) Int Cl.:
**G01N 21/90** (2006.01)

(86) International application number:
**PCT/EP2010/066560**

(87) International publication number:
**WO 2011/051488 (05.05.2011 Gazette 2011/18)**

(54) **Application and inspection system**

System zum Auftragen und zur Inspektion

Système d'application et d'inspection

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2009 GB 0919059**

(43) Date of publication of application:
**05.09.2012 Bulletin 2012/36**

(73) Proprietor: **Innosen Limited
Hong Kong (HK)**

(72) Inventor: **NELEN, Lucien Johannes
Worcestershire WR9 0LW (GB)**

(74) Representative: **Jackson, Derek Charles
Derek Jackson Associates
The Old Yard
Lower Town
Claines, Worcester WR3 7RY (GB)**

(56) References cited:
**EP-A1- 0 370 569      EP-A2- 0 371 643
GB-A- 1 494 426      US-A- 4 873 432**

**Description**

This invention relates to an application and inspection system which may be used for applying a sealing compound to an edge region of a can end and for subsequently inspecting the can end.

Sealing compound is applied to an edge region of a can end before the end is applied and sealed to a can body and it is generally desirable to inspect the sealing compound for completeness.

There are several requirements for the sealing compound. For example, the sealing compound should be applied in a sufficient thickness to permit sealing, but not in too great a thickness or too unevenly so as to waste sealing compound or prevent effective sealing. To satisfy these requirements, a can end is generally rotated just in excess of two entire revolutions while the sealing compound is being applied. In this way, the thickness of each layer of sealing compound is not too great to prevent effective sealing due to the increased thickness of the sealing compound in the region of overlap where three layers of sealing compound are applied, while effective sealing is ensured by rotating the can end in excess of two revolutions to ensure there is no gap in the sealing compound. Clearly, however, the amount of the overlap should be kept to a minimum to avoid wasting the sealing compound.

Setting up the system is rather complex and requires both experience and regular adjustment to obtain and maintain desired settings. For example the can end arriving at a compound application station is detected by an end presence sensor. At this time the can end is not rotating. A rotating chuck is moved axially upward towards the can end and engages with the can end. The chuck is rotating at a constant speed and there is, therefore, a degree of initial slippage between the chuck and the can end. The chuck is provided with a timing flag which is detected once every revolution of the chuck. Once the chuck has engaged with the can end and a subsequent timing signal has been received from the timing flag, an adjustable delay is initiated to ensure the can end is no longer slipping relative to the chuck. Once the adjustable delay has elapsed, a compound gun begins to spray an elastomeric compound onto the peripheral region of the can end.

The can end is then rotated for at least two full rotations, an adjustable timer being employed to ensure at least two full rotations are completed. The timer needs continual adjustment due to changes in the system. For example, changes in temperature, both ambient and of the compound gun itself, wear and accumulation of compound around the gun can affect the system and require adjustment of the timer. If too much compound is dispensed this will adversely affect the economies of the system, while if too little compound is dispensed the can end will not seal properly to the can body and the contents of the can will deteriorate.

After the prescribed number of rotations, the chuck is moved axially downwards away from the can end and releases the can end.

Consequently, as noted above, the known system has several disadvantages which can affect the cost effectiveness of the system through using either too much or too little sealing compound.

US 4873432 discloses a detector for a can making apparatus applying a compound to a seaming flange of a can end, the detector being for detecting the presence of the compound on the seaming flange of the can end.

EP 0371643 discloses an apparatus and method for inspecting workpieces which rely on the observation of a strip of a rotatable circular can end to be lined with gasketing composition. The scanning head further includes a proximity detector responsive to the positioning of the can end adjacent the scanning head and connected to trigger initiation of a scanning window when a can end arrives concentrically in the lining chuck at the lining station, and to discontinue the scanning window when the can end and chuck begin to descend on departure of the can end for onward transport.

GB 1494426 discloses a method and apparatus for measuring faults in the sealing of closures such as caps or the like of the kind in which a sealing composition is applied to the bottom of the cap in an annular zone.

It is therefore an object of the present invention to provide an inspection system which overcomes, or at least ameliorates, the disadvantages of the prior art.

According to the present invention there is provided an application and inspection system comprising: an application system for applying sealing compound to an edge region of a can end, the application system including means for rotating the can end and application means relative to each other to as to apply sealing compound to an edge region of the can end; and an inspection system for determining the integrity of the sealing compound applied to the can end, the inspection system including means for directing a source of radiation towards an edge region of the can end as the can end rotates relative to the inspection system and means for detecting radiation originating from the radiation source and reflected from the can end, the source of radiation being directed at the can end at a location upstream of a location at which the sealing compound is applied, wherein means are provided for calibrating the system, the calibration means comprising means for applying sealing compound onto a can end for a predetermined time, determining the length of the strip of sealing compound that has been applied with the inspection system, and determining the length of time required to apply a strip of sealing compound of a desired length.

By "upstream" it is meant that a specific location on the edge region of the can end will pass the radiation before the sealing compound is applied to the can end. In this way, during a first rotation of the can end relative to the inspection system the radiation from the radiation source is directed at the can end, while during a second or subsequent rotation of the can end relative to the inspection system the radiation from the radiation source is directed at sealing compound applied to the can end.

The can end may rotate relative to the application means or, alternatively, the application means may rotate relative to the can end.

The radiation source may comprise a plurality of light emitting diodes. The light emitting diodes may be arranged in one or more rows with, if more than one row is provided, different rows of the light emitting diodes emitting radiation of different wavelengths. Means may be provided for controlling the width of the beam emitted by the light emitting diodes. The control means may be selected from means for de-energising a proportion of the light emitting diodes, a mechanical shutter, and a digital mirror device.

Alternatively, the radiation source may comprise one or more lasers. For example, three lasers may be provided which emit radiation at different wavelengths. The radiation from the lasers may be combined to form a single beam or may be employed as separate beams. Means may be provided for controlling the intensity of the lasers so as to control the spectrum of the beam of radiation. Means may be provided for shaping the beam into a substantially rectangular configuration. The shaping means may be selected from optical means, a mechanical shutter and a digital mirror device.

The detecting means and the light source may be on separate optical axes or, alternatively, they may be on the same optical axis.

Operation of the system may be determined by a timing signal initiated from a timing flag provided on the means for rotating the can end and the application means relative to each other.

The application means may include a compound gun including a needle positioned in a nozzle of the gun for controlling the application of sealing compound, the needle being operated by at least two electromagnetic coils electrically connected in parallel.

The system may include means for regulating flow of sealing compound to the application means. The means for regulating flow may comprise a pump and a flow meter for controlling the pump or may comprise a positive displacement pump.

The system may include means for regulating flow of sealing compound from the application means, the regulating means including means for determining the pressure of the sealing compound fed to the application means and means for controlling a degree of opening of a valve of the application means in dependence upon the determined pressure.

The means for rotating the can end and the application means relative to each other may include means for regulating the temperature of the can end. The temperature regulating means may comprise means for regulating the temperature of a chuck on which the can end is mounted.

Means may be provided for storing data corresponding to radiation detected by the detecting means during the rotations and for comparing the data from the different rotations to determine whether there are any voids in the sealing compound applied to the can end. Means may be provided for rejecting any can end which has a void in excess of a threshold, such as 0.1 mm.

The desired length may correspond to slightly more than two revolutions of the can end relative to the application means. Means may be provided for initiating calibration. The initiating means may be selected from one or more of manual operation of calibration switch means, means for determining that the system has been started up, means for determining that the applicator has not been used for a threshold time, means for determining that the applicator has been used in excess of a threshold time, means for determining whether sealing compound has been applied to a predetermined number of can ends, means for determining a threshold temperature change of the applicator, and means for determining resistance of a coil used to activate the applicator.

Means may be provided during initial calibration for varying the spectrum of radiation directed towards the can end, both directly at the can end and at the sealing compound, and for analysing the resulting data to determine the wavelength or wavelength combination that provides greatest contrast between the presence and absence of the sealing compound.

Means may be provided to apply the sealing compound over less than one turn of the can end for a predetermined number of can ends and for inspecting the can ends to determine whether the sealing compound has been applied consistently to each of the can ends.

The present invention also relates to a system for dispensing a predetermined amount of material from a dispenser, the dispenser including a valve, such as a needle valve, the system including: means for supplying material to the dispenser at a predetermined flow rate; means for determining the pressure of the material supplied to the dispenser; and means for controlling a degree of opening of the valve so as to maintain the pressure of the material substantially constant. The means for supplying material may comprise a pump and flowmeter for controlling the pump, or a positive displacement pump.

For a better understanding of the present invention and to show more clearly how it may be carried into effect reference will now be made, by way of example, to the accompanying drawings in which:

Figure 1 is a side view of a part of a system for applying a sealing compound to an edge region of a can end;

Figure 2 is a top view corresponding to Figure 1 and including part of an inspection system;

Figure 3 is a diagrammatic side view of one embodiment of a compound gun for use in the present invention;

Figure 4 illustrates the use of a row of LEDs for illuminating the can end;

Figure 5 shows one illumination means for illuminating a can end with laser light in accordance with the present invention;

Figure 6 illustrates the use of a digital mirror for illuminating the can end;

Figure 7 shows a modified light source and sensor unit particularly for use with textured can ends;

Figure 8 illustrates one method of controlling the application of sealing compound from the compound gun;

Figure 9 illustrates another method of controlling the application of sealing compound from the compound gun; and

Figures 10 and 11 illustrate reflection profiles from can ends without and with voids.

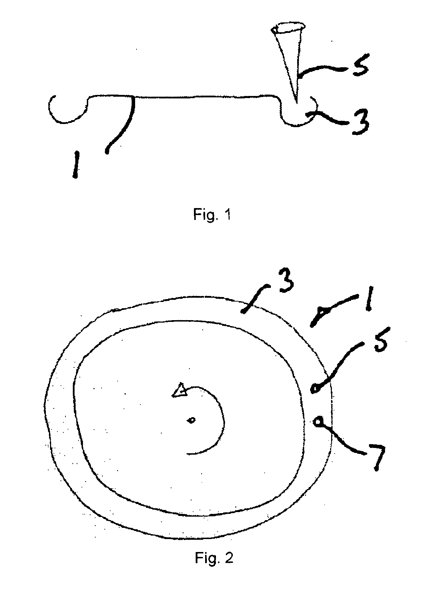

Figures 1 and 2 show a can end 1 which is formed with a channel 3 around the periphery thereof. A nozzle 5 of a compound gun is positioned to apply a sealing compound into the peripheral channel 3 and, as indicated diagrammatically in Figure 2, a light source and sensor unit 7 is positioned to direct a beam of light into the channel 3 for inspecting the channel and the sealing compound therein as the can end is rotated. It will be noted that the light source and sensor unit 7 is positioned upstream of the nozzle 5. Consequently, during a first rotation of the can end the light source and sensor unit is directed into the empty channel, while on a second and any subsequent rotation the light source and sensor unit is directed at sealing compound within the channel. Inspection is initiated by the timing signal from the timing flag (not shown), as is operation of the compound gun as previously explained.

The light source and sensor unit 7 shines a beam of light into the channel 3 while the can end rotates and initially determines a reflection profile for the can end during an entire rotation in order to obtain a reference level. Immediately the first rotation has been completed the light source and sensor unit 7 encounters the sealing compound in the channel 3 and determines the reflection profile for at least another complete rotation. The profiles are then compared to determine whether there is sealing compound along the entire length of the channel. If there is a void, the length of the void is calculated and the can end is rejected if the void exceeds a certain length. A can end 1 can be rejected using a shift register in known manner to identify the location of the can end to be rejected.

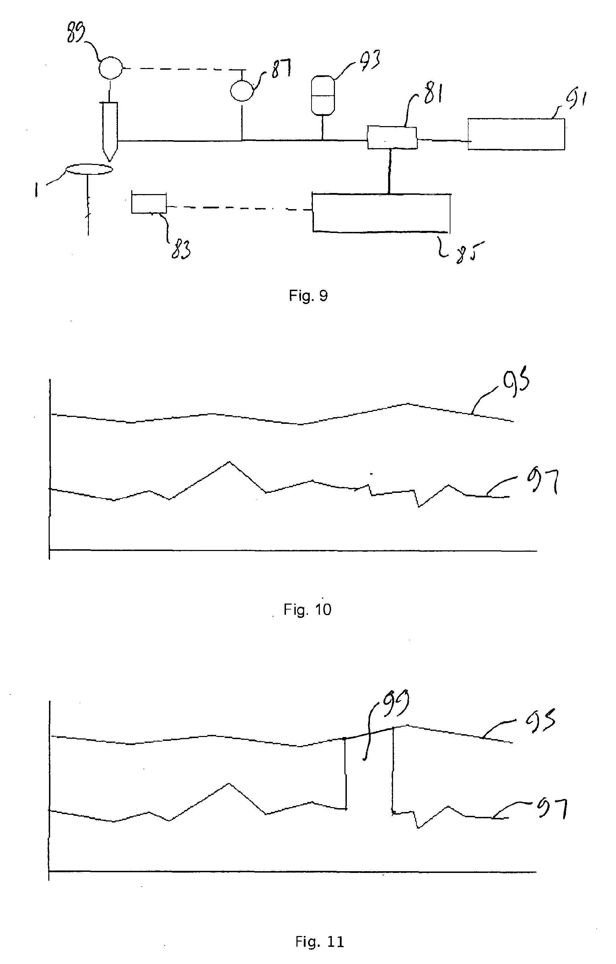

Sample reflection profiles are shown in Figures 10 and 11. Figure 10 shows a reflection profile in the absence of a void and shows in line 95 the reflection profile from the channel 3 before the sealing compound is applied and in line 97 the reflection profile (at a lower level) after the sealing compound has been applied. Figure 11 shows a reflection profile where a void is present and again shows in line 95 the reflection profile from the channel 3 before the sealing compound is applied and in line 97 the reflection profile after the sealing compound has been applied, but in this second case a void is illustrated by the elevated region 99 in the profile 97 showing that the can end is reflecting rather than the sealing compound which has reduced reflectivity compared with the can end. It should be noted, though, that the sealing compound may, in general, have either a lower or a higher reflectivity than the can end. As will be explained hereinafter, it is possible to optimise the wavelength of the light used for the inspection so as to maximise the difference between the reflection profiles.

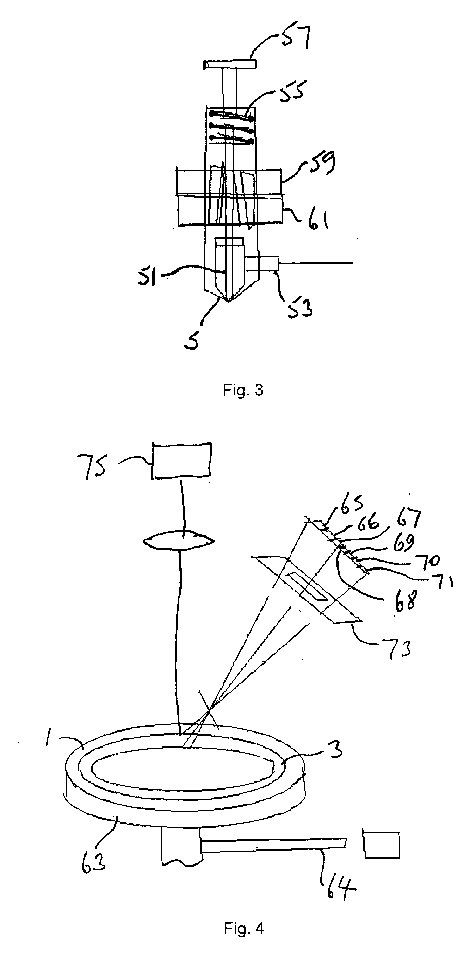

As explained previously, sealing compound is normally sprayed into the channel 3 of a can end for slightly more than two turns of the can end 1. Operation of the compound gun is controlled by a needle in the nozzle of the gun, the needle being operated by suitable means such as by electromagnetic means, by pneumatic means or by piezoelectric means. The needle needs to be operated with precise timing for the required number of rotations of the can end and electromagnetic operation is generally preferred for the rapid and repeated opening and closing of the nozzle as a result of movement of the needle. The operating force on the needle increases as the number of ampere windings in the electromagnet increases. However, because the available volume (and therefore the number of windings) for the electromagnet is generally limited, the electromagnetic coil is normally driven at high voltage, but for a minimum time to reduce the amount of heat required to be dissipated in the coil. It has been found that a greater magnetic force for operating the needle can be generated with two or more coils operating in parallel compared with an equivalent single coil within the same volume. In this respect, Figure 3 shows a compound gun having a nozzle 5 with a needle 51 arranged in the nozzle for controlling the flow of sealing compound which enters through inlet port 53. The position of the needle within the nozzle is determined by an adjusting screw 57 which determines needle lift. A spring 55, such as a helical coil spring, urges the needle towards a closed position of the valve and first and second electromagnetic coils 59, 61 control operation of the needle against the closing force of the spring 55. It should be noted, however, that a spring is not essential for closing the valve. As an alternative, for example, a second solenoid may be employed.

Moreover, the compound gun is also sensitive to temperature changes. In addition, friction forces affecting the operation of the needle change with temperature. A relatively high power is required to activate the needle so the temperature changes as the compound gun is turned on and off. This has required a continual readjustment of the compound gun requiring operator intervention and involves risks of voids in the compound. Adjustments are often minimised by setting the overlap of the compound to be longer than is necessary, but this results in an unnecessary use of the sealing compound.

It has been found that the light source and sensor unit 7 allows the system to calibrate itself. Calibration can take place, for example, when the system is started up, after the compound gun has not been used for a predetermined time (for example, based on cooling/heating data for the compound gun and/or ambient temperature), after the compound gun has been used for a predetermined time since calibration (such as 1 hour), after sealing compound has been applied to a predetermined number of can ends, after a predetermined temperature change has been detected for the compound gun, and/or after a predetermined change has been detected in the resistance of the coil used to activate the needle of the compound gun (the resistance of the coil being temperature dependent). If desired, a "Calibration" button may be provided as part of a control system for manually-initiated calibration.

The calibration process involves the system spraying sealing compound into the channel of a can end for a fixed time and subsequently measuring the length of the strip of compound deposited. The can end is rejected after calibration. Calibration is similar to normal operation in that the initial delay is employed to allow the can end to come up to speed. The compound is then applied to the can end for a test time (T1) that is estimated to be about ½ turn of the can end or alternatively about 10 ms. Once the test time has elapsed, the light source and sensor unit is used to identify the start of the strip of sealing compound in the channel 3. Once the start has been found, a timer is started and the time (T2) to the end of the strip of sealing compound is determined. The combined time (T3) to open and close the compound gun is the difference between the time the strip is identified (T2) and the test time (T1). That is:

$$T3 = T1 - T2$$

The total time (T4) for energising the compound gun in order to apply the required amount of compound to a can end can then be determined. For a can end having a predetermined diameter of X mm, the circumference (C) of the can end is 3.14 x X mm. The time (T5) for each revolution of the rotating chuck is known from the timing signal from the chuck. The overlap (O) in mm at the end of the second turn is preset, for example by an operator of the system. Consequently, the time (T6) for the overlap can be calculated as:

$$T6 = (O \times T5) / C$$

Finally, the total time can be determined as:

$$T4 = 2 \times T5 + T6 + T3$$

The overlap could be set up in other units (such as inches or degrees) or could be a percentage of the circumference of the can end.

It is also desirable from time to time to be able to deposit the sealing compound for one rotation less than normal to ensure the sealing compound extends more than one full turn of the can end. In particular, this allows a user to determine that there is no gap under such circumstances, and that the sealing compound is being applied for more than two turns.

In the event there are problems with a compound application system, it is a common practice to test whether the system is operating in a repeatable and consistent manner. This is accomplished at present by setting the system to apply the sealing compound over less than one turn of the can end and by repeating the operation for a predetermined number of can ends (such as ten). The can ends are then examined manually to determine whether the sealing compound has been applied consistently to each of the can ends and that the system is therefore basically sound (i.e., that the slip on the chuck is consistent, the opening and closing times of the compound gun are constant and the like).

The present application and inspection system can be used to check automatically whether the overall system is operating in a consistent and repeatable manner. Such a check could be scheduled for certain events, such as if the system has been stationary for a predetermined time (such as 30 minutes). Such an automatic check involves no substantial modification of the application and inspection system as described and can be used to establish that the overall system is working properly before production is started. For example, any dried sealing compound in the nozzle of the compound gun can give rise to inconsistent results.

The light source of the light source and sensor unit 7 may be, for example, light emitting diodes (LEDs) or lasers.

In the case of LEDs, one or more rows of LEDs may be provided as shown in Figure 4 which shows a can end 1 supported on a chuck 63 which is provided with a timing flag 64. In the illustrated embodiment seven LEDs (65, 66, 67, 68, 69, 70 and 71) are provided in a single row. Where two rows are provided, one row may be of infra-red emitting LEDs and the other row may be of LEDs which emit visible light, such as RGB radiation. The radiation emitted from the LEDs is combined and shaped by mask 73 into a rectangular strip that is projected onto the channel 3. Reflected radiation is picked up by a sensor 75. The width of the rectangular strip can be adjusted if desired to match the width of the channel 3, for example from 2 to 8 mm, by turning on a greater or fewer number of the LEDs of each row (that is by switching off the outer LEDs (or lasers if used)). The beam length in the circumferential direction may be up to 0.2 mm which enables voids of 0.1 mm to be detected. The intensity of the emitted radiation can be adjusted electronically by known means, for example by de-energising one or more of the light sources or by varying the current through the light sources. The use of LEDs which in combination emit a range of wavelengths can give rise to higher contrast between the sealing compound and the material of the can end as will be explained in more detail hereinafter. The use of visible light may also facilitate installation of the unit 7.

In the case of lasers, one or more lasers may be provided. Where more than one laser is provided, lasers with different wavelengths may be employed, for example lasers with three or more different wavelengths (for example, red, blue, green and/or infra-red). The output of the lasers is ideally combined into a single beam, although separate beams can be employed if desired. Preferably, the or each laser beam is then shaped into a rectangular configuration as will be described in more detail hereinafter to match the width of the channel 3, although this may not always be essential.

During initial calibration, but not necessarily during subsequent re-calibrations, different wavelengths of radiation may be used, both on the material of the can end itself and on the sealing compound, and the results analysed to determine the wavelength or wavelength combination that provides greatest contrast between the presence and absence of the sealing compound. The optimum wavelength or wavelength combination varies depending on the nature of the can end and on the nature of the sealing compound, but generally remains constant for any particular can end and sealing compound combination.

The radiation directed at the can end is reflected in a different manner depending on whether it is incident on the material of the can end or on the sealing compound. The sealing compound is a diffuse reflector, while the material of the can end is a specular reflector which reflects the incident radiation at a specific angle. The sensor or sensors is or are therefore positioned such that specular reflection is not detected, but diffuse reflection is. That is, the material of the can end is seen as a dark material, whereas the sealing compound is seen as a relatively light material. The reflected radiation is detected either by one or more sensors, for example an RGB sensor and/or an infra-red sensor, or by an array of sensors as will be described in more detail hereinafter.

Although the system shown in Figures 1 and 2 has been described in relation to rotating the can end and maintaining the nozzle and inspection system stationary, the can end may be maintained stationary and the nozzle and inspection system may be rotated. As a further alternative both the can end and the nozzle and inspection system may move to create relative rotation.

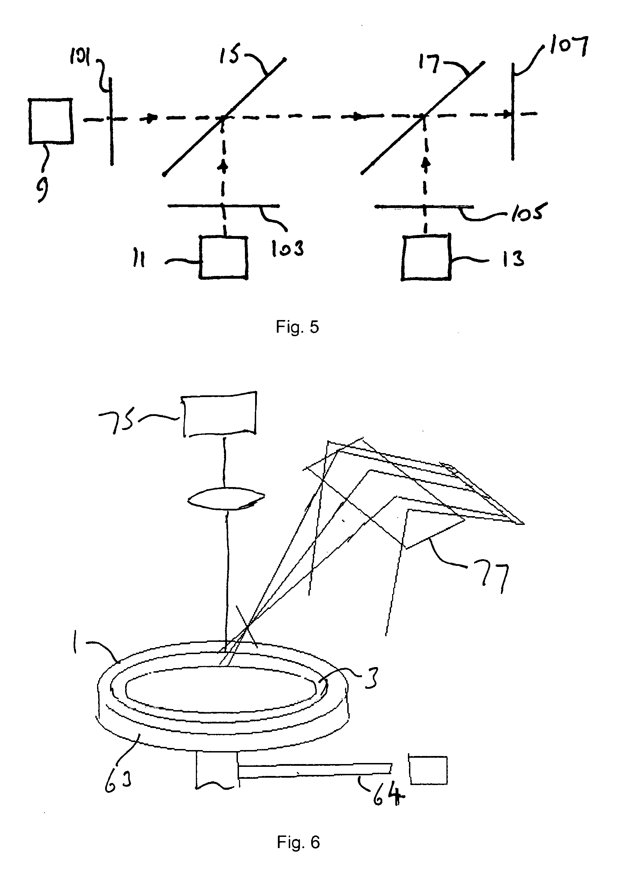

An illumination means for illuminating the channel 3 with laser light is shown in Figure 5. Three lasers 9, 11, 13 provide light output at chosen wavelengths, such as substantially 405 nm, substantially 532 nm and substantially 650 nm with the outputs from the lasers being combined by way of dichroic mirrors 15 and 17. By changing the intensity of light output from each laser, a complete range of colours can be produced for projection into the channel 3. As an alternative an X-cube (or X-prism) can be used to produce a complete range of colours for projection into the channel 3. The intensity of the light output can be varied by changing the light output itself or by using mechanical means or a digital mirror device 77 as shown in Figure 6.

Similarly, the sensor of the light source and sensor unit 7 can use dichroic mirrors to separate the reflected illumination into its components and to detect each component separately. Alternatively, an X-cube (or X-prism) can be used to separate the reflected illumination into its components. In each case, the laser of the light source is replaced with a detector. The reflected illumination includes ambient light, and to minimise the amount of ambient light reaching the detectors, a bandpass filter may be positioned in front of each detector to pass only the wavelength originally transmitted. If a bandpass filter is not used, then the power of the light source(s) may need to be relatively higher to reduce the influence of ambient light. In addition, the amplitude of the emitted radiation may be modulated, for example as brief pulses at a frequency of the order of 250 kHz, and the sensors may similarly be adapted only to sense reflected illumination emitted during the pulses, so as to further reduce the likelihood of interference from stray radiation. The shape of the resulting beam of radiation in Figure 5 is determined by lenses 101, 103 and 105 which are associated with the lasers 9, 11 and 13, respectively and by lens 107 which acts on the combined beam. The lenses in combination form the beam into a substantially rectangular configuration having a relatively short length and a relatively long width. The lenses 101, 103 and 105 may be double convex lenses to determine the length of the rectangle, while lens 107 is of cylindrical type and determines the width and distributes the illumination more evenly over the width of the rectangle.

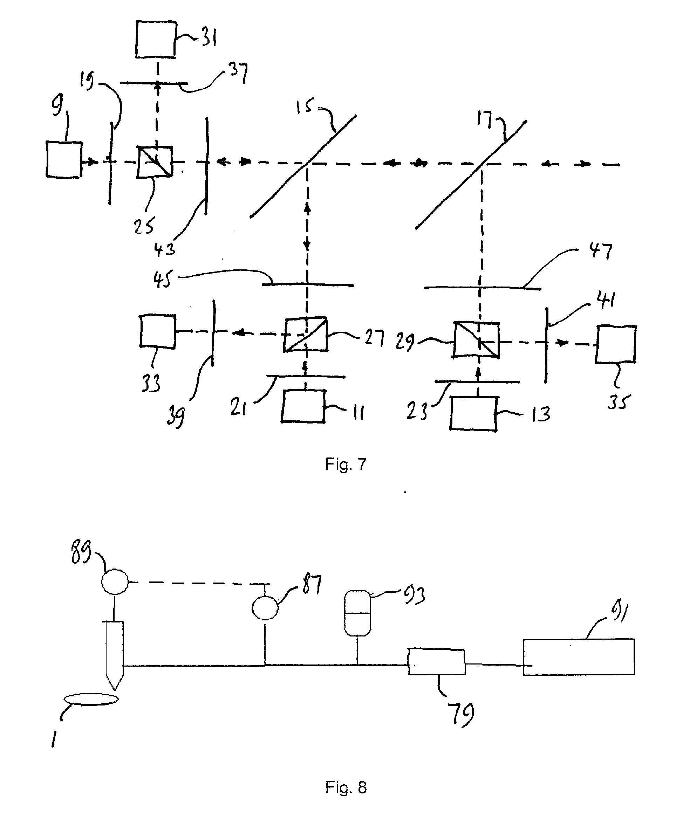

In some cases can ends with textured metal surfaces are used. Textured surfaces tend to give rise to a degree of diffused reflection rather than pure specular reflection. In such a case it is preferable to arrange the sources and the detectors on the same optical axes. Such an arrangement is shown in Figure 7 which is a modification of the arrangement shown in Figure 5. In Figure 7, a polariser 19, 21, 23, a polarising beam splitter 25, 27, 29 and a 1/4λ plate 43, 45, 47 are positioned in front of the lasers 9, 11 and 13, with the beam splitter 25, 27, 29 in each case directing reflected illumination to a detector 31, 33, 35 by way of a bandpass filter 37, 39, 41. Consequently, radiation from each laser 9, 11, 13 passes twice through the respective 1/4λ plate so as to be reflected in the polarising beam splitter 25, 27, 29 towards the respective detector 31, 33, 35.

A further temperature-related problem relates to the manner in which the sealing compound flows when it is applied to the can ends. The radial position of the sealing compound is affected by the flow characteristics of the sealing compound, which, in turn, are determined by the temperature of the compound. Consequently, the radial position of the sealing compound can be influenced and regulated by the temperature of the compound. In part, this can be accomplished by regulating, and adjusting if appropriate, the temperature of the sealing compound before it exits the compound gun. However, once the sealing compound has exited the compound gun, the temperature of the compound is largely determined by the temperature of the can end with which the sealing compound is in contact because the thermal mass of the can end is large compared with the thermal mass of the sealing compound. However, it has been found that the temperature of the can ends can themselves be regulated, thereby also regulating the temperature of the sealing compound, by controlling the temperature of the chuck 63 on which the can end 1 is mounted when the sealing compound is applied.

Since the same amount of sealing compound is to be applied to each can end, this may be achieved by controlling the flow rate of the sealing compound to the compound gun in dependence upon the rate at which the can ends are to be produced. This can be achieved as shown in Figure 8 by using a positive displacement pump 79, such as a peristaltic (or tube) pump, where the pump speed is regulated to directly determine the flow rate. Alternatively, as shown in Figure 9, a conventional pump 81 can be used and the flow rate of the sealing compound can be determined by a flow meter 83, a control system 85 being used to control the pump such that the desired flow rate is achieved. The flow rate, though, needs to be compatible with the settings of the compound gun, especially the needle valve of the gun. This is achieved in each case by monitoring the pressure in the line between the pump and the compound gun by means of a pressure controller 87. If the pressure falls then the gun is depositing too much sealing compound, while if the pressure rises then the gun is not depositing sufficient sealing compound. The amount of sealing compound deposited may be controlled by adjusting the needle in the nozzle of the compound gun, in particular by adjusting the amount of lift of the needle by means of a stepper motor 89. This can be accomplished either manually or automatically by a motorised or like control in response to changes in the pressure. Sealing compound flows to the pump 79, 81 from bulk storage 91 or from drums and a pressure buffer tank 93 is provided between the pump and the compound gun to allow for temporary fluctuations in flow and/or pressure. It should be noted that a stepper motor is not essential and that the needle can be adjusted by an alternative movement generator such as a DC motor or a piezo motor.

Monitoring of the pressure in a dispensing gun, for example by monitoring the pressure within the gun or in a supply line to the gun, can be employed in other situations. For example, a spray gun could be used for applying a protective coating to the inside of a can. The spray should be applied as a predetermined number of milligrams for each can and this may be achieved by controlling the flow rate of the lacquer or other protective material to the spray gun. As with the application of the sealing compound described above, this can be achieved by using a positive displacement pump, such as a peristaltic (or tube) pump, where the pump speed is regulated to directly determine the flow rate. Alternatively, a conventional pump can be used and the flow rate of the protective material can be determined by a flow meter, a control system being used to control the pump such that the desired flow rate is achieved. As explained above, though the flow rate needs to be compatible with the settings of the spray gun, especially the needle valve of the gun. This is achieved by monitoring the pressure in the line between the pump and the spray gun. If the pressure falls then the gun is depositing too much protective material, while if the pressure rises then the gun is not depositing sufficient protective material. The amount of protective material deposited may be controlled by adjusting the needle in the nozzle of the spray gun, in particular by adjusting the amount of lift of the needle. This can be accomplished either manually or automatically by a motorised or like control in response to changes in the pressure.

## Claims

1. An application and inspection system comprising: an application system for applying sealing compound to an edge region of a can end (1), the application system including means for rotating the can end and application means (5) relative to each other to as to apply sealing compound to an edge region of the can end; and an inspection system (7) for determining the integrity of the sealing compound applied to the can end, the inspection system including means for directing a source (9, 11, 13) of radiation towards an edge region of the can end as the can end rotates relative to the inspection system and means for detecting radiation originating from the radiation source and reflected from the can end, the source of radiation being directed at the can end at a location upstream of a location at which the sealing compound is applied, **characterised in that** means are provided for calibrating the system, the calibration means comprising means (5) for applying sealing compound onto a can end (1) for a predetermined time, determining the length of the strip of sealing compound that has been applied with the inspection system, and determining the length of time required to apply a strip of sealing compound of a desired length.

2. A system as claimed in claim 1, wherein the radiation source comprises a plurality of light emitting diodes (65, 66, 67, 68, 69, 70, 71), the light emitting diodes (65, 66, 67, 68, 69, 70, 71) optionally being arranged in one or more rows, for example in a plurality of rows with different rows of the light emitting diodes emitting radiation of different wavelengths.

**3.** A system as claimed in claim 2, wherein means (73) are provided for controlling the width of the beam emitted by the light emitting diodes (65, 66, 67, 68, 69, 70, 71), the control means being selected, for example, from means for de-energising a proportion of the light emitting diodes, a mechanical shutter, and a digital mirror device (77).

**4.** A system as claimed in claim 1, wherein the radiation source comprises one or more lasers (9, 11, 13), for example three lasers (9, 11, 13) which emit radiation at different wavelengths, means optionally being provided for controlling the intensity of the lasers (9, 11, 13) so as to control the spectrum of the beam of radiation, means (101, 103, 105, 107) also optionally being provided for shaping the beam into a substantially rectangular configuration.

**5.** A system as claimed in any preceding claim, wherein operation of the system is determined by a timing signal initiated from a timing flag (64) provided on the means for rotating the can end (1) and the application means (5) relative to each other.

**6.** A system as claimed in any preceding claim, wherein the application means (5) includes a compound gun including a needle (51) positioned in a nozzle of the gun for controlling the application of sealing compound, the needle being operated by at least two electromagnetic coils (59, 61) electrically connected in parallel.

**7.** A system as claimed in any preceding claim and including means (79, 81, 83) for regulating flow of sealing compound to the application means (5), the means for regulating flow comprising, for example, a pump (81) and a flow meter (83) for controlling the pump, or a positive displacement pump (79).

**8.** A system as claimed in any preceding claim and including means for regulating flow of sealing compound from the application means (5), the regulating means including means (87) for determining the pressure of the sealing compound fed to the application means and means (89) for controlling a degree of opening of a valve of the application means in dependence upon the determined pressure.

**9.** A system as claimed in any preceding claim, wherein the means for rotating the can end (1) and the application means (5) relative to each other includes means for regulating the temperature of the can end, the temperature regulating means optionally comprising means for regulating the temperature of a chuck (63) on which the can end (1) is mounted.

**10.** A system as claimed in any preceding claim, wherein means are provided for storing data corresponding to radiation detected by the detecting means during the rotations and for comparing the data from the different rotations to determine whether there are any voids in the sealing compound applied to the can end (1), means optionally being provided for rejecting any can end (1) which has a void in excess of a threshold.

**11.** A system as claimed in any preceding claim, wherein the desired length corresponds to slightly more than two revolutions of the can end (1) relative to the application means (5).

**12.** A system as claimed in any preceding claim, wherein means are provided for initiating calibration.

**13.** A system as claimed in claim 12, wherein the initiating means is selected from one or more of manual operation of calibration switch means, means for determining that the system has been started up, means for determining that the applicator has not been used for a threshold time, means for determining that the applicator has been used in excess of a threshold time, means for determining whether sealing compound has been applied to a predetermined number of can ends, means for determining a threshold temperature change of the applicator, and means for determining resistance of a coil used to activate the applicator.

**14.** A system as claimed in any preceding claim, wherein means are provided during initial calibration for varying the spectrum of radiation directed towards the can end (1), both directly at the can end and at the sealing compound, and for analysing the resulting data to determine the wavelength or wavelength combination that provides greatest contrast between the presence and absence of the sealing compound.

**15.** A system as claimed in any preceding claim and including means to apply the sealing compound over less than one turn of the can end for a predetermined number of can ends and for inspecting the can ends to determine whether the sealing compound has been applied consistently to each of the can ends.

**Patentansprüche**

**1.** Applikations- und Inspektionssystem, das Folgendes umfasst: ein Applikationssystem zum Applizieren einer Dichtungsmasse auf eine Randregion eines Dosenendes (1), wobei das Applikationssystem Mittel zum Drehen von Dosenende und Applikationsmittel (5) relativ zueinander aufweist, um Dichtungsmasse auf eine Randregion des Dosenendes zu applizieren; und ein Inspektionssystem (7) zum Ermitteln der Vollständigkeit der auf das Dosenende applizierten Dichtungsmasse, wobei das Inspektionssystem Mittel zum Richten einer Quelle (9, 11, 13) von Strahlung auf eine Randregion des Dosenendes beinhaltet, während das Dosenende relativ zum Inspektionssystem rotiert, und Mittel zum Erkennen von Strahlung, die von der Strahlungsquelle kommt und vom Dosenende reflektiert wird, wobei die Strahlungsquelle auf das Dosenende an einer Stelle stromaufwärts von einer Stelle gerichtet wird, an der die Dichtungsmasse appliziert wird, **dadurch gekennzeichnet, dass** Mittel zum Kalibrieren des Systems vorgesehen sind, wobei die Kalibrationsmittel Mittel (5) zum Applizieren von Dichtungsmasse auf ein Dosenende (1) für eine vorbestimmte Zeit, Ermitteln der Länge des aufgebrachten Streifens Dichtungsmasse mit dem Inspektionssystem und Ermitteln der Zeitdauer umfassen, die zum Applizieren eines Streifens Dichtungsmasse einer bestimmten Länge benötigt wird.

2. System nach Anspruch 1, wobei die Strahlungsquelle mehrere Leuchtdioden (65, 66, 67, 68, 69, 70, 71) umfasst, wobei die Leuchtdioden (65, 66, 67, 68, 69, 70, 71) optional in einer oder mehreren Reihen angeordnet sind, z.B. in mehreren Reihen mit unterschiedlichen Reihen der Leuchtdioden, die Strahlen unterschiedlicher Wellenlängen emittieren.

3. System nach Anspruch 2, wobei Mittel (73) zum Regeln der Breite des von den Leuchtdioden (65, 66, 67, 68, 69, 70, 71) emittierten Strahls vorgesehen sind, wobei die Mittel beispielsweise aus Mitteln zum Aberregen eines Teils der Leuchtdioden, einer mechanischen Blende und einer digitalen Spiegelvorrichtung (77) ausgewählt sind.

4. System nach Anspruch 1, wobei die Strahlungsquelle ein oder mehrere Laser (9, 11, 13) umfasst, z.B. drei Laser (9, 11, 13), die Strahlung mit unterschiedlichen Wellenlängen emittieren, wobei optional Mittel zum Regeln der Intensität der Laser (9, 11, 13) vorgesehen sind, um das Spektrum des Strahlungsbündels zu regeln, wobei optional auch Mittel (101, 103, 105, 107) zum Formen des Strahls zu einer im Wesentlichen rechteckigen Konfiguration vorgesehen sind.

5. System nach einem vorherigen Anspruch, wobei der Betrieb des Systems von einem Synchronisationssignal bestimmt wird, das von einem Synchronisationsflag (64) auf den Mitteln zum Drehen des Dosenendes (1) und der Applikationsmitteln (5) relativ zueinander ausgeht.

6. System nach einem vorherigen Anspruch, wobei das Applikationsmittel (5) eine Auftragspistole mit einer in einer Düse der Pistole zum Steuern der Applikation von Dichtungsmasse befindlichen Nadel (51) aufweist, wobei die Nadel von wenigstens zwei elektromagnetischen Spulen (59, 61) betätigt wird, die elektrisch parallel geschaltet sind.

7. System nach einem vorherigen Anspruch mit Mitteln (79, 81, 83) zum Regeln des Flusses von Dichtungsmasse zu dem Applikationsmittel (5), wobei das Mittel zum Regeln von Fluss zum Beispiel eine Pumpe (81) und ein Durchflussmessgerät (83) zum Steuern der Pumpe oder eine Verdrängerpumpe (79) umfasst.

8. System nach einem vorherigen Anspruch mit Mitteln zum Regeln des Flusses von Dichtungsmasse vom Applikationsmittel (5), wobei das Regelungsmittel Mittel (87) zum Ermitteln des Drucks der dem Applikationsmittel zugeführten Dichtungsmasse und Mittel (89) zum Regeln des Öffnungsgrades eines Ventils des Applikationsmittels in Abhängigkeit von dem ermittelten Druck umfasst.

9. System nach einem vorherigen Anspruch, wobei das Mittel zum Drehen des Dosenendes (1) und des Applikationsmittels (5) relativ zueinander Mittel zum Regeln der Temperatur des Dosenendes umfasst, wobei das Temperaturregelungsmittel optional Mittel zum Regeln der Temperatur eines Spannfutters (63) umfasst, auf dem das Dosenende (1) montiert ist.

10. System nach einem vorherigen Anspruch, wobei Mittel zum Speichern von Daten vorgesehen sind, die Strahlung entsprechen, die von den Detektionsmitteln während der Rotationen erkannt werden, und zum Vergleichen der Daten von den unterschiedlichen Rotationen, um zu ermitteln, ob es Fehlstellen in der auf das Dosenende (1) applizierten Dichtungsmasse gibt, wobei optional Mittel zum Zurückweisen eines Dosenendes (1) vorgesehen sind, das eine Fehlstelle jenseits eines Schwellenwertes aufweist.

11. System nach einem vorherigen Anspruch, wobei die gewünschte Länge geringfügig mehr als zwei Umdrehungen des Dosenendes (1) relativ zu dem Applikationsmittel (5) entspricht.

12. System nach einem vorherigen Anspruch, wobei Mittel zum Einleiten der Kalibration vorgesehen sind.

13. System nach Anspruch 12, wobei das Einleitungsmittel ausgewählt ist aus einem oder mehreren aus manuellem Betrieb eines Kalibrationsschaltmittels, Mittel zum Ermitteln, ob das System gestartet wurde, Mittel zum Ermitteln, ob der Applikator nicht für eine Schwellenzeit benutzt wurde, Mittel zum Ermitteln, ob der Applikator über eine Schwellenzeit hinaus benutzt wurde, Mittel zum Ermitteln, ob Dichtungsmasse auf eine vorbestimmte Anzahl von Dosenenden appliziert wurde, Mittel zum Ermitteln einer Schwellentemperaturänderung des Applikators und Mittel zum Ermitteln des Widerstands einer zum Aktivieren des Applikators benutzten Spule.

14. System nach einem vorherigen Anspruch, wobei Mittel während der anfänglichen Kalibration zum Variieren des Strahlungsspektrums vorgesehen sind, das auf das Dosenende (1) gerichtet wird, sowohl direkt am Dosenende als auch an der Dichtungsmasse, und zum Analysieren der resultierenden Daten zum Ermitteln der Wellenlänge oder Wellenlängenkombination, die den größten Kontrast zwischen der An- und der Abwesenheit der Dichtungsmasse bietet.

15. System nach einem vorherigen Anspruch, das Mittel zum Applizieren der Dichtungsmasse über weniger als eine Umdrehung des Dosenendes für eine vorbestimmte Anzahl von Dosenenden und zum Inspizieren der Dosenenden umfasst, um zu ermitteln, ob die Dichtungsmasse einheitlich auf jedes der Dosenenden appliziert wurde.

**Revendications**

1. Système d'application et d'inspection comprenant : un système d'application pour appliquer un produit d'étanchéité sur la zone de bordure d'une extrémité de boîte (1), le système d'application comprenant un moyen pour faire pivoter l'extrémité de boîte et un moyen d'application (5) relatifs l'un à l'autre de manière à appliquer le produit d'étanchéité sur une zone de bordure de l'extrémité de boîte ; et un système d'inspection (7) pour déterminer l'intégrité du produit d'étanchéité appliqué à l'extrémité de boîte, le système d'inspection comprenant un moyen pour diriger une source (9, 11, 13) de rayonnement vers une zone de bordure de l'extrémité de boîte tandis que l'extrémité de boîte tourne par rapport au système d'inspection et au moyen de rayonnement de détection provenant de la source de rayonnement et reflété par l'extrémité de boîte, la source de rayonnement étant dirigée sur l'extrémité de boîte à un emplacement en amont d'un emplacement auquel le produit d'étanchéité est appliqué, **caractérisé en ce que** des moyens sont prévus pour étalonner le système, les moyens d'étalonnage comprenant un moyen (5) pour appliquer le produit d'étanchéité sur une extrémité de la boîte (1) pendant une durée prédéterminée, pour déterminer la longueur de la bande de produit d'étanchéité qui a été appliquée avec le système d'inspection, et pour déterminer la durée requise pour appliquer une bande de produit d'étanchéité d'une longueur voulue.

2. Système selon la revendication 1, dans lequel la source de rayonnement comprend une pluralité de diodes électroluminescentes (65, 66, 67, 68, 69, 70, 71), les diodes électroluminescentes (65, 66, 67, 68, 69, 70, 71) étant optionnellement disposées en une ou plusieurs rangées, par exemple en une pluralité de rangées où différentes rangées des diodes électroluminescentes émettent un rayonnement de différentes longueurs d'ondes.

3. Système selon la revendication 2, dans lequel des moyens (73) sont prévus pour commander la largeur du rayon émis par les diodes électroluminescentes (65 66, 67, 68, 69, 70, 71), le moyen de commande étant sélectionné, par exemple, entre des moyens pour mettre hors tension une proportion des diodes électroluminescentes, un volet mécanique et un dispositif à miroir numérique (77).

4. Système selon la revendication 1, dans lequel la source de rayonnement comprend un ou plusieurs lasers (9, 11, 13), par exemple trois lasers (9, 11, 13) qui émettent un rayonnement à différentes longueurs d'ondes, un moyen étant facultativement prévu pour contrôler l'intensité des lasers (9, 11, 13) de manière à contrôler le spectre du faisceau de rayonnement, des moyens (101, 103, 105, 107) étant aussi facultativement prévus pour former le faisceau en une configuration essentiellement rectangulaire.

5. Système selon l'une quelconque des revendications précédentes, dans lequel le fonctionnement du système est déterminé par un signal de synchronisation provenant d'un indicateur de synchronisation (64) prévu sur le moyen de rotation de l'extrémité de boîte (1) et le moyen d'application (5) l'un par rapport à l'autre.

6. Système selon l'une quelconque des revendications précédentes, dans lequel le moyen d'application (5) comprend un pistolet à produit d'étanchéité comprenant un pointeau (51) positionné dans une buse du pistolet pour contrôler l'application du produit d'étanchéité, le pointeau étant actionné par au moins deux bobines électromagnétiques (59, 61) connectées électriquement en parallèle.

7. Système selon l'une quelconque des revendications précédentes et comprenant un moyen (79, 81, 83) pour réguler le débit de produit d'étanchéité vers le moyen d'application (5), le moyen de régulation du débit comprenant, par exemple, une pompe (81) et un débitmètre (83) pour commander la pompe, ou une pompe volumétrique (79).

8. Système selon l'une quelconque des revendications précédentes et comprenant un moyen pour réguler le débit de produit d'étanchéité provenant du moyen d'application (5), le moyen de régulation comprenant un moyen (87) pour déterminer la pression du produit d'étanchéité fourni au moyen d'application et un moyen (89) pour commander le degré d'ouverture d'une soupape du moyen d'application en fonction de la pression déterminée.

9. Système selon l'une quelconque des revendications précédentes, dans lequel le moyen de rotation de l'extrémité de boîte (1) et le moyen d'application (5) relatifs l'un à l'autre comprennent un moyen pour réguler la température de l'extrémité de la boîte, le moyen pour réguler la température comprenant optionnellement un moyen pour réguler la température d'un mandrin (63) sur lequel est montée l'extrémité de boîte (1).

10. Système selon l'une quelconque des revendications précédentes, dans lequel des moyens sont prévus pour stocker les données correspondant au rayonnement détecté par le moyen de détection pendant les rotations et pour comparer les données des différentes rotations pour déterminer s'il y a des vides dans le produit d'étanchéité appliqué à l'extrémité de la boîte (1), un moyen étant optionnellement prévu pour rejeter toute extrémité de boîte (1) qui comporte un vide dépassant un seuil.

11. Système selon l'une quelconque des revendications précédentes, dans lequel la longueur voulue correspond à un peu plus de deux tours de l'extrémité de boîte (1) par rapport au moyen d'application (5).

12. Système selon l'une quelconque des revendications précédentes, dans lequel des moyens sont prévus pour lancer l'étalonnage.

13. Système selon la revendication 12, dans lequel le moyen de lancement est sélectionné entre un ou plusieurs des moyens suivants : moyen de commutation de commande manuelle d'étalonnage, moyen pour déterminer que le système a été mis en marche, moyen pour déterminer que l'applicateur n'a pas été utilisé pendant une durée seuil, moyen pour déterminer que l'applicateur a été utilisé pendant plus longtemps qu'une durée seuil, moyen pour déterminer si le produit d'étanchéité a été appliqué à un nombre prédéterminé d'extrémités de boîtes, moyen pour déterminer un changement de température seuil de l'applicateur, et moyen pour déterminer la résistance d'une bobine utilisée pour activer l'applicateur.

14. Système selon l'une quelconque des revendications précédentes, dans lequel des moyens sont prévus pendant l'étalonnage initial pour faire varier le spectre de rayonnement dirigé vers l'extrémité de la boîte (1), à la fois directement sur l'extrémité de la boîte et sur le produit d'étanchéité, et pour analyser les données résultantes pour déterminer la longueur d'onde ou la combinaison de longueurs d'ondes qui fournit le plus grand contraste entre la présence et l'absence du produit d'étanchéité.

15. Système selon l'une quelconque des revendications précédentes et comprenant un moyen pour appliquer le produit d'étanchéité sur moins d'un tour de l'extrémité de boîte pour un nombre prédéterminé d'extrémités de boîtes et pour inspecter les extrémités de boîtes pour déterminer si le produit d'étanchéité a été appliqué de façon constante sur chacune des extrémités de boîtes.

Fig. 1

Fig. 2

Fig. 3

Fig. 4

Fig. 5

Fig. 6

Fig. 7

Fig. 8

Fig. 9

Fig. 10

Fig. 11

**EP 2 494 337 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4873432 A
- EP 0371643 A
- GB 1494426 A